# EUROPEAN PATENT SPECIFICATION

(11) **EP 1 542 060 B1**
(45) Date of publication and mention of the grant of the patent: **07.02.2007**
(21) Application number: 04106302.5
(22) Date of filing: 06.12.2004
(51) Int. Cl.: G02B 26/10, B41J 2/47

(54) **Spatial light modulator calibration**
Kalibrierung eines räumlichen Lichtmodulators
Calibrage d'un modulateur spatial de lumière

(30) Priority: 08.12.2003 US 527896 P; 23.11.2004 US 995827 P
(43) Date of publication of application: 15.06.2005
(73) Proprietor: AGFA CORPORATION, Ridgefield Park, NJ 07660-2199 (US)
(72) Inventor: Sagan, Stephen, 02420, Lexington (US)
(74) Representative: Verbrugghe, Anne Marie L.

(56) References cited:
- WO-A-00/69631
- US-A1- 2003 189 635
- US-B1- 6 188 427

## Description

### FIELD OF THE INVENTION

The present invention relates to a spatial light modulator. More specifically the invention is related to a method and a system for compensating spatial variations in the intensity of light across a spatial light modulator.

### BACKGROUND OF THE INVENTION

Spatial light modulators (SLM's) are used in a variety of applications to control projected light, because they can be modulated at kilohertz rates and can handle relatively high levels of power. They can be used in transmission and/or reflection.

For high power applications, SLMs based on micro-electromechanical systems (MEMS) are typically used. These MEMS can be one dimensional or two dimensional arrays of elements. Examples include grating light valve (GLV) devices, which are based on diffractive optical MEMS.

GLV devices comprise a series of tiny ribbons on the surface of a silicon substrate that are typically electrostatically driven to cause the ribbons to move by a fraction of a wavelength of the relevant light. This creates a dynamic, tunable grating that precisely varies the amount of light that is diffracted or reflected.

Other examples include tilt mirror MEMS devices in which the movement and positioning of mirrors is performed in order to guide a beam of light. These are very common in fiber optic systems and display devices.

More recently SLM's have been used in commercial printing systems. Their high-speed modulation enables a substrate to be exposed very quickly with high resolution. Moreover, these MEMS SLMs can meet the high power handling requirements that are required to expose the printing substrates, or plates, at high speed.

For example, imagesetters and platesetters are used to expose the media that are used in many conventional offset printing systems. Imagesetters are typically used to expose film that is then used to make the plates for the printing system. Platesetters are used to directly expose the plates. Systems are being deployed that use a combination of a light source and a spatial light modulator (SLM). As a result, the speed of operation is no longer limited by the rate at which the laser can be modulated or the power that can be extracted from that single laser.

One currently deployed system uses a combination of a laser bar and a GLV SLM. The laser bar, in combination with projection optics, produces a rectangular cross-sectioned beam of light that is projected onto the GLV SLM. The GLV is then used to modulate transmitted light through the GLV onto the plate substrate. These systems enable very fast exposures of large substrates. Light from multiple semiconductor lasers in combination with the GLV allow for the scanning of multiple lines simultaneously on the media. Calibration of these SLMs is very important especially in print applications. The human eye can be very sensitive to artifacts in the resulting image that is produced by the print or display imaging system. This is especially true if the artifacts result in lines or regions of different shading that extend across the image.

One example of this is banding in print media. It arises when elements of the imaging system expose the print media at different exposure levels. The result can be horizontal or diagonal lines that extend across the image, which, even if very faint, many times can be discerned by the human eye. This results in an unacceptable image.

This characteristic has been a barrier to the implementation of SLM devices in printing applications and especially commercial printing applications. As a result, many imaging systems used in printing applications still use a conventional modulated raster-scanned laser dot to expose the photo or thermally sensitive media.

One solution to avoid the generation of these artifacts in the generated image is to calibrate the SLM to achieve uniform exposure.

This is typically done by equalizing the transmitted intensity across the width of the SLM.

One problem, however, that arises with these conventional calibration routines is that they are performed under static conditions. Specifically, the spatial light modulator is scanned in front of a slit detector. The light transmitted through the elements spatial light modulator, when the elements are transmissive and non-transmissive, are compared. Then, the drive or control levels of the digital-to-analog converters (DACS) are set so that the transmit levels for both the on-states and the off-states of the elements of the spatial light modulator are made uniform. In short, this system can be used to create relative uniformity across the length of the SLM when it is scanned in front of the slit detector during this calibration process. This is shown in US patent number 2003/0189635.

The drawback associated with this procedure, however, concerns that the approach does not take into account the dynamic variation of the spatial light modulator and light source or LIM unit during operation. Specifically, changes in these on-DAC and off-DAC levels result in changes to the pulse width of the light that is transmitted through the GLV as it is modulated and scanned over the media on the drum. These changes in the pulse width result in changes to the spot size, since the period over which the GLV is transmissive during its modulation dictates the size of the spot in the fast axis scan direction. Thus, these dynamics associated with the modulation of the GLV result in changes to the spot size, and thus, the density of ink, for example, that the media retains, or not, during the off-set printing process. Conventional uniform calibration processes do not compensate for the dynamics and thus, can detrimentally impact the quality of the image on the media.

As a result, the present invention is directed to a method and system for calibrating a spatial light modulator, such as a GLV in a printing system.

### SUMMARY OF THE INVENTION

As in previous systems, it detects intensity levels of light provided by elements of the spatial light modulator. It determines control levels for the elements of the spatial light modulator that will compensate for spatial variation in the intensity of light across the spatial light modulator. These changes in intensity can be a result of the changes in properties of the GLV across its length. It can also be the result of changes in the intensity of light provided by the LIM across the spatial light modulator. According to the invention, however, the compensation comprehends the pulse width changes of the elements of the spatial light modulator, due to changes in the control levels due to the spatial variation compensation. This second level of compensation ensures that changes to the spot size that may result from conventional compensation are comprehended in generating a total compensation scheme that accounts for the dynamics in the operation of the spatial light modulator.

Specifically, in one implementation, control levels for the elements of the spatial light modulator are selected to under compensate for the spatial variations to account for changes in the control levels due to the spatial variation compensation.

The above-mentioned advantageous effects are realized by a method and a system for compensating spatial variations in the intensity of light across a spatial light modulator having the specific features set out in claim 1. Specific features for preferred embodiments of the invention are set out in the dependent claims.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

Further advantages and embodiments of the present invention will become apparent from the following description [and drawings].

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a plan schematic view of a platesetter imaging engine to which the present invention is applicable;
Fig. 2 is schematic plan view of the optical train of the GLV SLM system;
Fig. 3 is schematic plan view of the electronic drive system for the GLV device;
Fig. 4 is a plot of relative power as a function of GLV shutter illustrating the variation in GLV and LIM performance across the shutters of the GLV;
Fig. 5 is a flow diagram illustrating the process for detecting the intensity of light transmitted through each shutter of the GLV in response to the on-control level data;
Fig. 6 is a flow diagram illustrating the process for detecting the intensity of light transmitted through the GLV in response to the off-control level data;
Fig. 7 is a schematic diagram illustrating an exposure spot generated on the media by the modulation of the GLV in both the fast scan and slow scan directions;
Fig. 8 illustrates the pulse width variation arising from different on control levels for a shutter of the GLV in the fast scan direction;
Fig. 9 is a plot of pulse width (full-width half-max) in microseconds as a function of shutter and for various DAC settings;
Fig. 10 is a plot of exposure in millijoules per square centimeter as a function of spot dimension in micrometers showing the relationship between integrated spot width and DAC level;
Fig. 11 is a plot of DAC correction as a function of GLV shutter, illustrating the correction profiles; and
Fig. 12 is a plot of DAC correction as a function of GLV shutter, further illustrating the component corrections achieved when using the present invention.

### DETAILED DESCRIPTION OF THE INVENTION

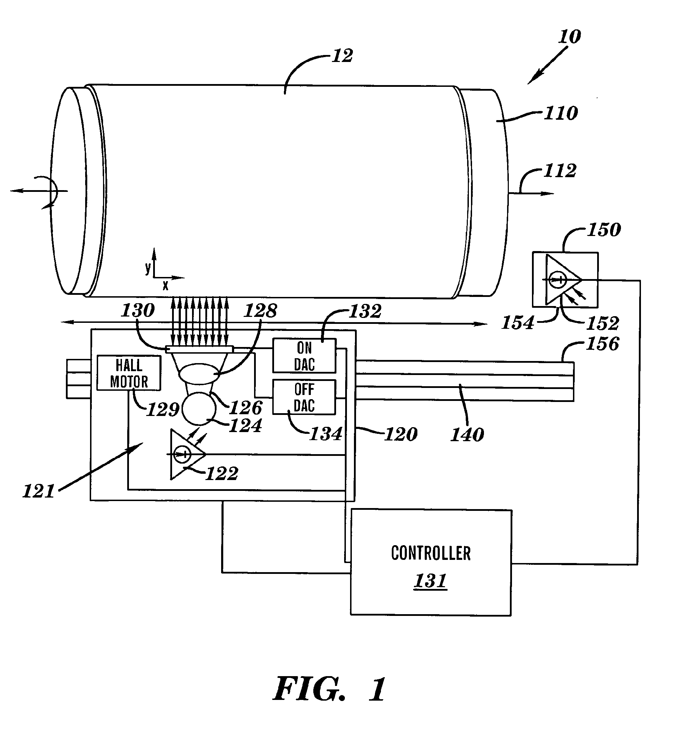

Fig. 1 shows prior art imaging engine 10 to which the present invention is applicable in one implementation.

This imaging engine 10 can be deployed in a platesetter in which the media 12 is a photosensitive plate. In another implementation, it is deployed in an imagesetter in which the media 12 is film. Typically, in imagesetters, however, an internal drum configuration is used.

The imaging engine 10 comprises a media drum 110. The drum 110 revolves on an axis-of-rotation 112 that is co-axial with the drum 110. In the illustrated example, the media 12 is held against the outside of the drum 110. This configuration is typically termed an external drum configuration.

In an alternative implementation, the media 12 is held along an inner side of the drum 110 to provide an internal drum configuration.

A carriage 120 is disposed adjacent to the drum 110. It is controlled by a controller 131 to move along track 140 that extends parallel to the rotational axis 112 of the drum 110.

In the internal drum configuration, the carriage 120 moves within the drum 110 and is typically supported on a cantilever-like track, generally extending down through the center axis of the drum 110.

In either case, the carriage 120 supports a GLV SLM system 121 that includes a light source or LIM 122. In the present implementation, this light source 122 comprises an array of laser diodes in a bar.

The beams from these laser diodes are combined into a single output and coupled into an integrating optical system 124.

Generally, because of the multi-source nature and because individual laser diodes have spatial intensity profiles that are somewhat Gaussian, the integrator 124 is typically required to generate a beam 126 with a rectangular cross section and with a uniform or improved spatial intensity profile.

The spatially homogeneous beam 126 is coupled to projection optics 128, which ensure that the beam has a rectangular cross-section and a planar phase front. This rectangular beam is then coupled through a spatial light modulator 130 to the media 12 held on the drum 110. A Hall-effect focus motor 129 is used to adjust the focus position provided by the projection optics 128 under control of the controller 131.

In the present implementation, the spatial light modulator 130 comprises a linear array of grating light valves (GLV). The elements of the grating light valve array function as shutters that control the level of transmission to the media 12. Generally, each grating light valve comprises an optical cavity that will propagate light through the grating light valve to the media in response to the optical size of the cavity and the wavelength of light generated by the light source 122.

In other implementations, different spatial light modulators are used. For example, in some examples, the spatial light modulator 130 comprises a two-dimensional array of elements. Different types of spatial light modulators can also be used, such as spatial light modulators based on liquid crystal or tilt mirror technology.

In the present implementation, the operation of the spatial light modulator elements is controlled by an ON DAC system 132 and an OFF DAC system 134. These devices dictate the modulation level of the elements of the spatial light modulator 130.

The elements of the spatial light modulator 130 are controlled in a binary fashion such that, during operation, they are either in an ON or transmissive state to expose the corresponding pixel or spot on the media 12, or an OFF state or dark, non-transmissive state to leave the corresponding pixel on the media 12 unexposed. Whether the elements of the spatial light modulator 130 are in a transmissive or non-transmissive state depends on the size of their respective optical cavities. The ON DAC system 132 and the OFF DAC system 134 are loaded with ON and OFF control level data that dictate the drive voltages used to control the elements during the on and off states. These ON and OFF control level data are loaded into the ON DACS 132 and the OFF DACS 134 by the controller 131.

In other implementations, the elements are modulated to multiple levels, such as 256, to provide gray-scaling, for example.

A calibration sensor 150 is provided. In the present embodiment, this calibration sensor 150 comprises a photodiode 152 and a slit aperture 154. The combination of the photodiode 152 and the slit aperture 154 enable the controller 131 to monitor the operation of individual elements of the spatial light modulator 130 when the carriage is moved to the calibration position 156, such that it is opposite the calibration sensor 150.

In an alternative embodiment, the calibration sensor comprises a one dimensional or a two dimension sensor such as a CCD array. These linear or planar sensor arrays are useful to increase the speed of calibration and/or improve the uniformity of the illumination on a pixel by pixel basis.

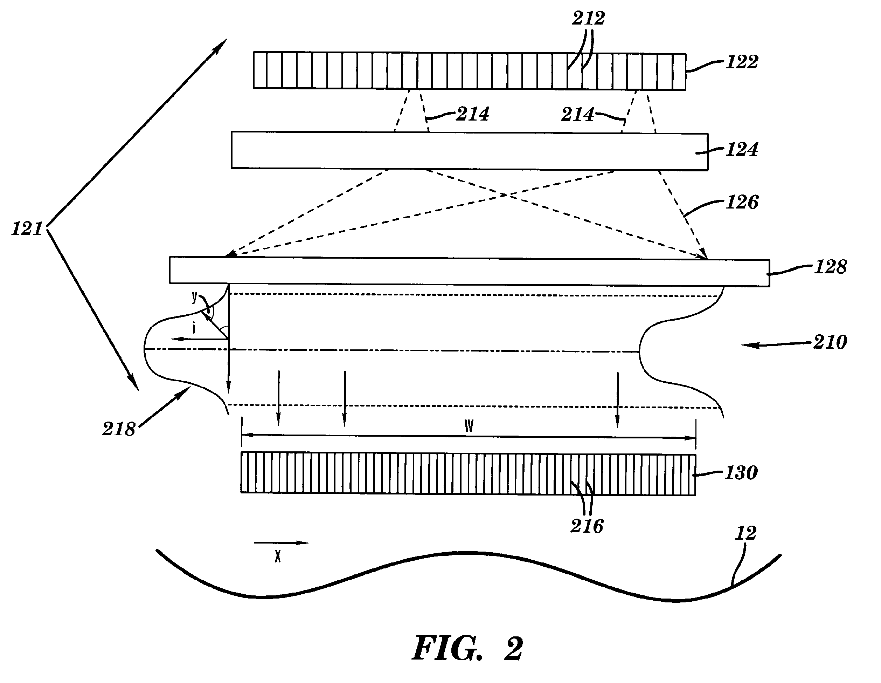

Fig. 2 better illustrates the GLV SLM optical system 121. Specifically, the laser bar 122 comprises multiple laser elements for ridges 212. Each of these emits a diverging beam 214. These beams 214 are collected by the integrating optics 124. The integrating optics 124 functions to in effect image the light from each of the individual laser elements 212 across the entire width of the rectangular projection beam. Thus, this expands the diverging beams 214 that extend across the entire width W of the GLV device 130. Next, the projection optics 128 converge the diverging beam 126 from the integration optics 124 and project that beam onto the shutters 216 of the GLV device 130. The combination of the integration optics 124 and the projection optics 128 produce a beam 218 that has a relatively uniform phase front and intensity profile. As a result, through the operation of the laser bar or LIM 122, and the GLV SLM 130, a modulated pattern of spots is produced on the media 12.

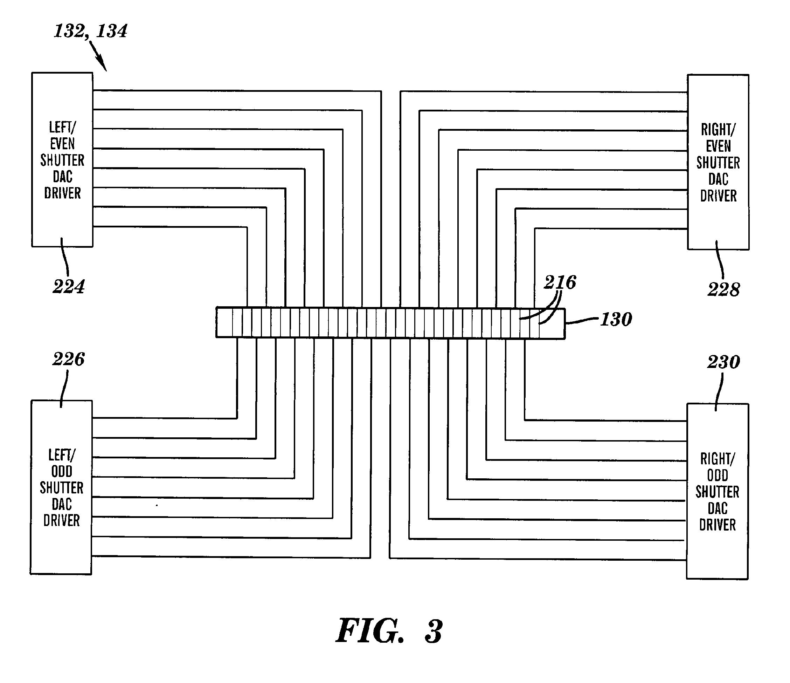

Fig. 3 illustrates the on-DAC and off-DAC 132, 134 electrical system that is used to drive the shutters 216 of the GLV 130.

Specifically, each of the on-DAC 132 and off-DAC 134 comprise four separate devices. Specifically, the on-DAC 132, which controls the on level of each shutter, for example, comprises a left even shutter DAC driver 224, a left odd shutter DAC driver 226, a right even shutter DAC driver 228, and a right odd shutter DAC driver 230. The off DAC comprises a similar array of driver that control the off level of the shutters

The division of each of the on-DAC 132 and the off-DAC 134 into four separate drive devices enable for effective distribution of the electronic drive signals to the various shutters 216 of the GLV 130. In more detail, the left even DAC driver 224 drives the even shutters on the left side of the GLV 130, the left odd shutter DAC driver 226 drives the odd shutters on the left side of the GLV 130, the right even shutter DAC driver 228 drives the even shutters on the right side of the GLV 130, and the right odd shutter DAC driver 230 drives the odd shutters on the right side of the GLV 130. In a similar vein, a separate set of four off-DAC drivers are provided in the off-DAC system 134.

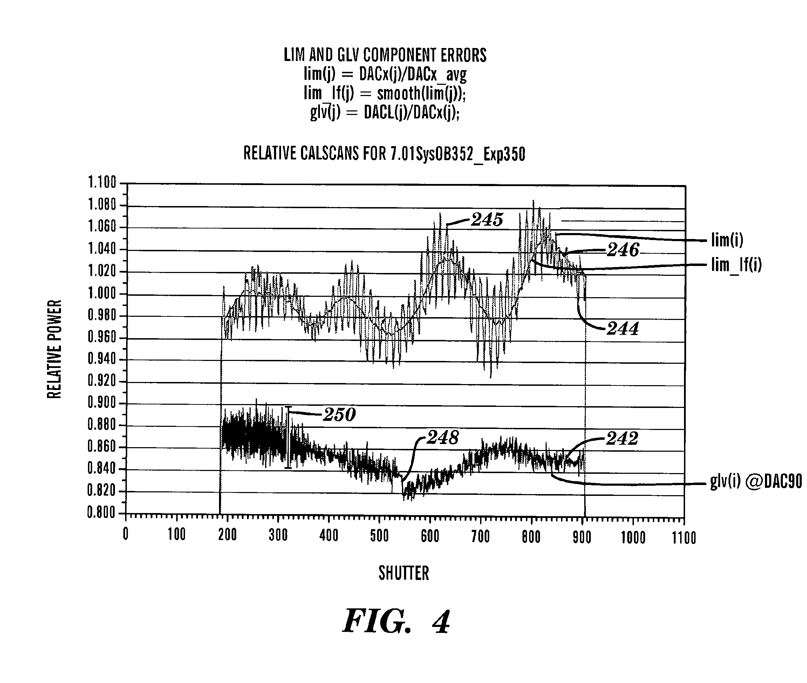

Fig. 4 is a plot of the relative power as a function of shutter for both GLV and LIM of optical system 121. It illustrates the relative power variation across the shutters of the light transmitted through the GLV. Some of this variation results from effects from the LIM 122 and some results from the GLV 130. Specifically, due to the electronic drive system illustrated in Fig. 3, a number of variations occur in the power 242 that is transmitted by the GLV as a function of shutter. Specifically, the use of the left odd/even DAC drivers 224/226 and the right even shutter DAC drivers 228, 230, result in a discontinuity 248 near the center shutters 216 of the GLV 130. Specifically, due to minor process variations in the fabrication of these integrated drivers 224, 226, 228, 230, and the GLV 130, they generate slightly different drive signals. As a result, the discontinuity 248 arises.

Moreover, the high spatial frequency variation 250 between successive shutters is generally due to the alternating even and odd DAC drivers. Specifically, since every other shutter 216 is driven by a different driver, there is shutter to shutter variation between the transmitted power through the GLV 130.

Similarly, there is spatial variation in the intensity of light 245 generated by the LIM 122. Specifically, the LIM exhibits spatial oscillation 244 that is somewhat coarser than the variation in the shutters 216 of the GLV 130. Moreover, even if these high frequency changes are ignored, there is also some longer period variation as illustrated by line 246.

In order to compensate for the variations in both the LIM's spatial intensity profile and the GLV's variation of transmitted light illustrated in Fig. 4, the performance of the GLV/LIM combination is first characterized using the slit detector system 150.

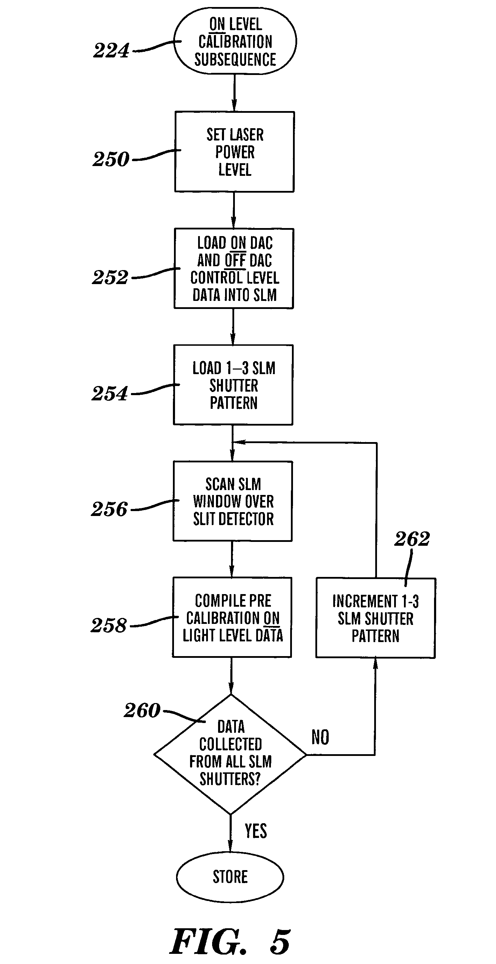

According to the invention, the calibration of the GLV is accomplished using the slit detector 150. It is done at several desired test power levels. The process begins with a calibration scan of the lens/GLV at a known power for the LIM and at a zero DAC level on the GLV. This calibration scan is recorded as the LIM signature as a function of LIM power and GLV shutter. Subsequent calibrations start at some flat DAC level, such as 70 or 90, and then altered on a pixel by pixel basis to match the LIM signature or an extinction factor that the DAC level represents, a function such as scaled by a constant K. This requires the DAC to yield a constant extinction or scaling for K for a current I in position X. In short, calibration for more than one DAC level is used to characterize the GLV non-linear response. In different embodiments, GLV at strategic beam positions is monitored and used to minimize the number of calibration processes. The current slit size is 5 to 10 micrometers, but larger slit sizes can be used. This can be used to compensate for known changes and pulse width variation. Specifically, Fig. 5 is a process diagram showing the process for gathering the data 242 plotted in Fig. 4. Specifically, the power setting to the laser bar 122 is set in step 250. Then, the on-DAC and off-DAC control level data is loaded into the SLM 130 in step 252. Specifically, the on-DAC and off-DAC control data is loaded so that only every fourth SLM shutter 216 is in a transmissive state and the others are not. In step 254 of Fig. 5 this is indicated as "load 1-3 SLM shutter pattern". Then, the SLM GLV is scanned over the slit detector 150 in step 256. The resulting data generated by the detector 152 is compiled in step 258. If all data is not collected from all of the SLM shutters, as determined in step 260, then the 1-3 SLM shutter pattern is incremented in step 262 and the process repeats.

This process of loading 1-3 shutter patterns and then scanning the SLM GLV in front of the slit detector 150 enables the detection of shutter-to-shutter variation in transmitted intensity and specifically, allows for the detection of the high spatial frequency component shown in the plot of Fig. 4.

In the typical implementation, the on-DAC level is set to a static level, such as a DAC drive level of 90 in step 252. Thus, the performance of the GLVs at similar drive levels is determined.

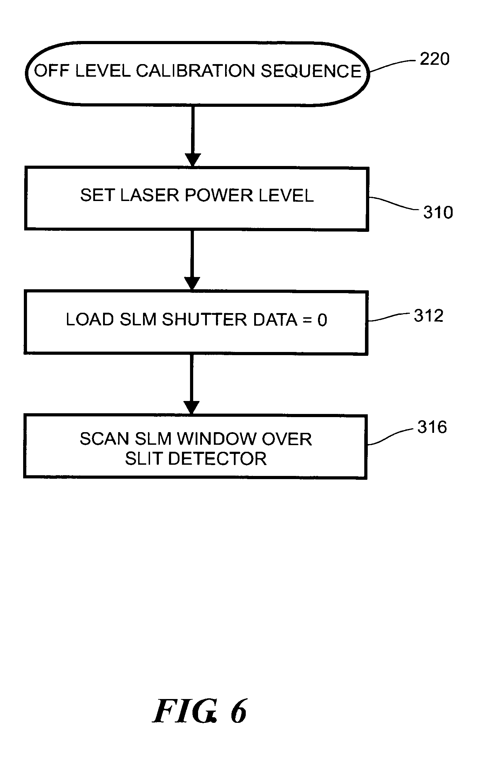

Fig. 6 is a flow diagram illustrating the process for collecting the LIM transmission data 244. Specifically, in step 310, the power to the laser bar 122 is set. Then, the shutters of the GLV are loaded with a data to put them all in a transmissive state. This is indicated by step 312 in Fig. 6. In this state, the GLV is scanned over the slit detector 150 in step 316.

As discussed previously, gathering this static calibration information produced by the combination of the LIM and the GLV, however, does not take into effect the dynamic characteristics that arise during the scanning of the media 12 on the drum 110 during operation.

This is largely due to the fact that the pixel or spot that is generated on the media 12 when a given shutter 216 of the SLM GLV 130 is transmissive, is determined in part by the transition from the off to the on and the on to the off state. This dictates the size of the pixel or spot in the fast scan axis or in the direction Y, as illustrated in Fig. 1. The size of the spot in the X-axis direction in contrast is dictated by the width of the GLV shutter and diffraction effects and thus remains stable under static and dynamic conditions.

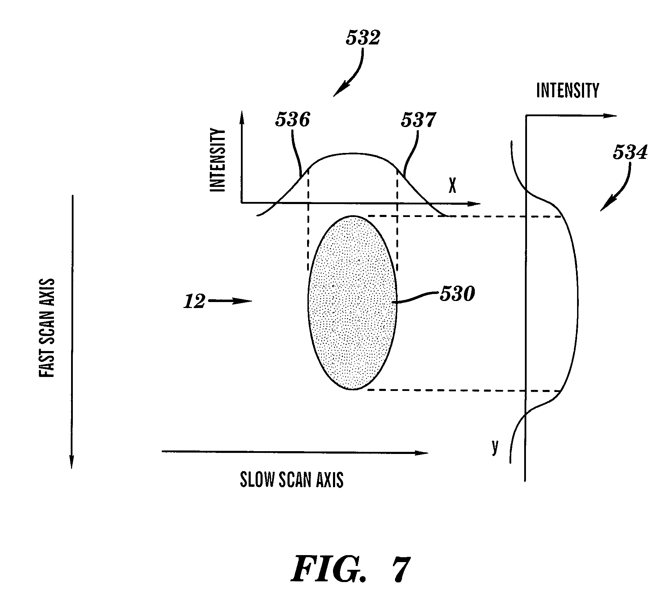

Fig. 7 illustrates the spot 530 generated on the media 12 by the operation of the GLV 130 and the LIM 122. Typically, the spot exhibits a variation 536 in the intensity across the X-axis or slow axis direction. The tails of the plot 537 are largely due to diffraction effects. However, regardless of the speed of the media and the scan speed/modulation of the GLV, the full width half-max of the spot 530 remains relatively stable in this slow axis scan or X direction.

In contrast, the size of the spot in the Y-axis or fast scan axis direction is dictated by the transition of each shutter 216 between the off and on states. Thus, the length of the spot 530 in the Y-axis direction would tend to be increased, for example, in response to higher speed rotation of the drum 110, or slower modulation of the respective shutter 216 of the SLM GLV 130.

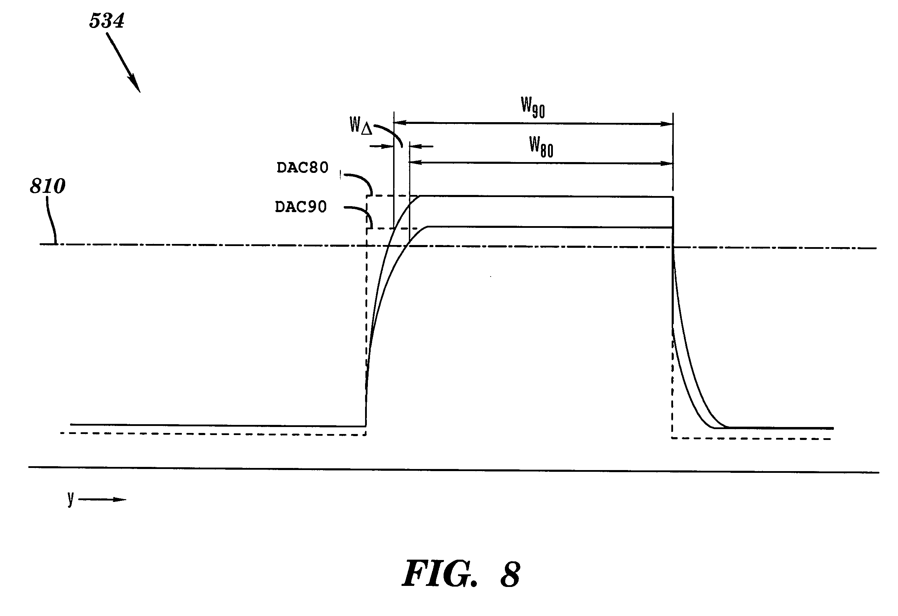

Fig. 8 illustrates the changes in pulse width in the fast scan or Y-axis direction that arise due to in the process of calibration or flattening the intensity transmission through the GLV that occurs during the calibration process.

Specifically, changes to the DAC level from a nominal level of 90, for example, to 80 result in a change in the pulse width from W90 to W80. This results in a change in the size of the spot 530 in the Y-axis direction as illustrated WΔ. These changes in the pulse width are the typical result of the process of calibration in which the on-DAC control levels are set in an effort to flatten the relative power transmitted through the shutters of the GLV.

Specifically, with reference to Fig. 4, using the shutter-to-shutter on-DAC control level data used to drive the shutters between the off and on states in order to remove the shutter to shutter variation illustrated in Fig. 4, results in each of the shutters being driven by different on-DAC control level data when they are in their on-state. This is required in order to flatten the intensity of the light transmitted across the X-axis width of the GLV 130.

This change in the drive level, however, from the nominal 90, to 80, for example, results in a change in the width of the spot 530 illustrated relative to Fig. 7, and pulse width change illustrated in Fig. 8. As a result, due to this process, the flattening of the transmitted light through the GLV due to the static calibration using the slit detector 150 has the undesired effect of changing the spot size due to the dynamics of the modulation of the GLV. Specifically, since the shutter of the GLV needs to move less far because of the lower DAC drive voltage, it reaches its state more quickly. Thus, the difference between the width W80 and W90, has the effect of changing the spot size by the distance WΔ. This change in size, when imposed on the binary media 12, results in a substantial change in the spot size. Specifically, at the exposure threshold 810, there can be a 1% change in the drive voltage to the shutter element, can result in a 1% or more change in the size of the spot on the media.

As a result, according to the present invention, the control levels of the elements of the spatial light modulator are set to compensate for spatial variation in the intensity across the spatial light modulator, but also the concomitant pulse width changes for the elements of the spatial light modulator due to changes in the control levels due to the spatial variation compensation.

In other words, the control levels for the elements of the spatial light modulator are set to under compensate for the spatial variation as illustrated with reference to Fig. 4. This accounts for the pulse width changes from the elements of the spatial light modulator due to changes in the control levels due to the spatial variation compensation. In short, on control level under compensation technique is used to further compensate for the shifts in spot size due to the changes in the dynamic response of the elements.

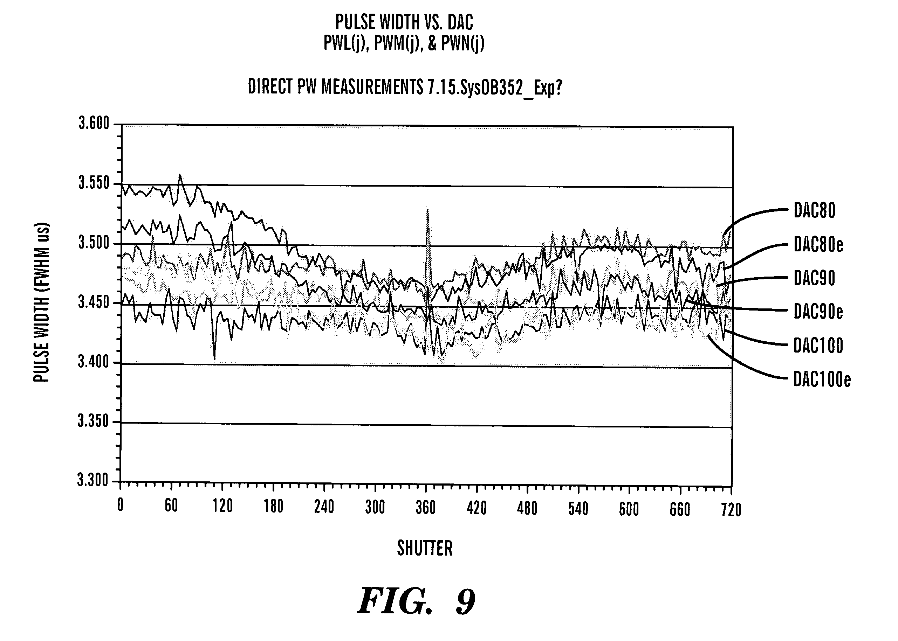

Fig. 9 is a plot of the pulse width full width half max in microseconds as a function of shutter for the even-DACS and the on-DACs for DAC settings of 80, 90, and 100. Specifically, as illustrated, even if the variation between the even and odd DAC drivers is removed, the pulse width variation between the DAC setting of 80, 90, and 100 for example, is striking and results in shifts in spot size between 3.55 microseconds and 3.45 microseconds. The plot of Fig. 9 therefore demonstrates the pulse width variation exhibited by different DAC settings, thus requiring for compensation beyond simply flattening the response across the GLVSLM under static conditions.

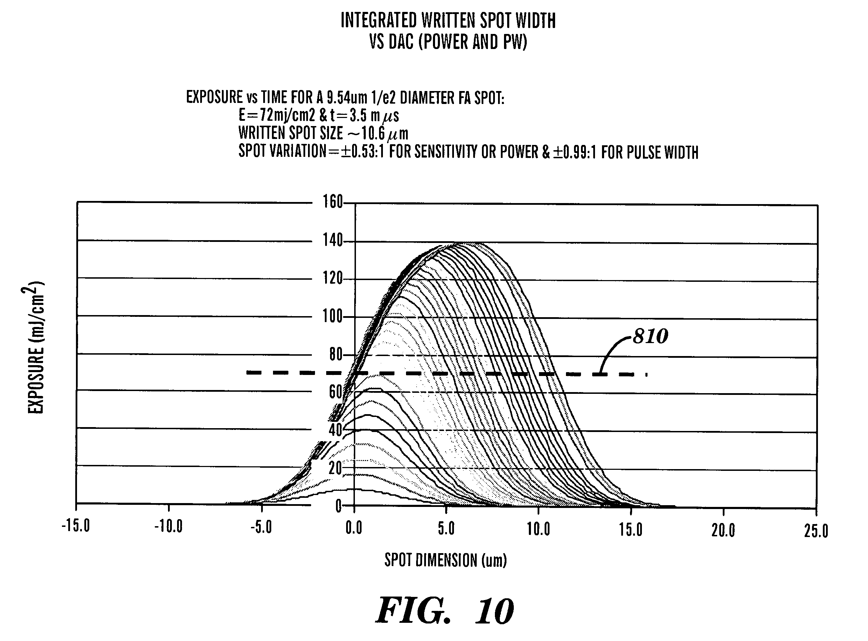

Fig. 10 is a plot of exposure in milliJoules per centimeter squared as a function of spot dimension. This illustrates the spot dimensions in micrometers for various exposures, and also relative to the exposure threshold 810 of the binary media.

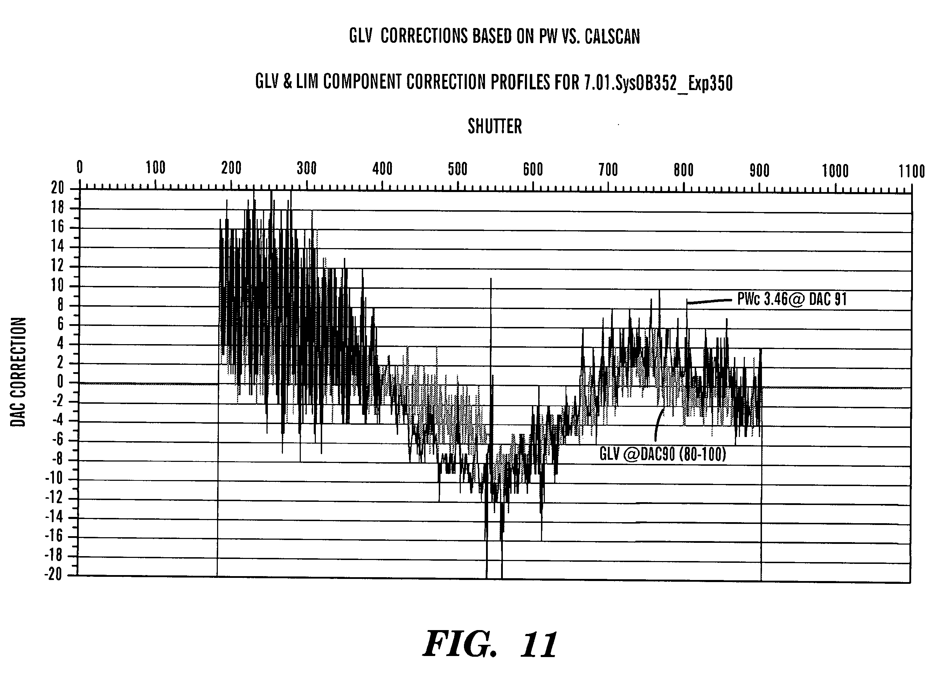

Fig. 11 is a plot of DAC correction as a function of GLV shutter. This is a cumulative compensation that also compensates for the changes in pulse width, due to the DAC drive levels. It illustrates the pulse width corrections and the DAC corrections between the range of 80 to 90.

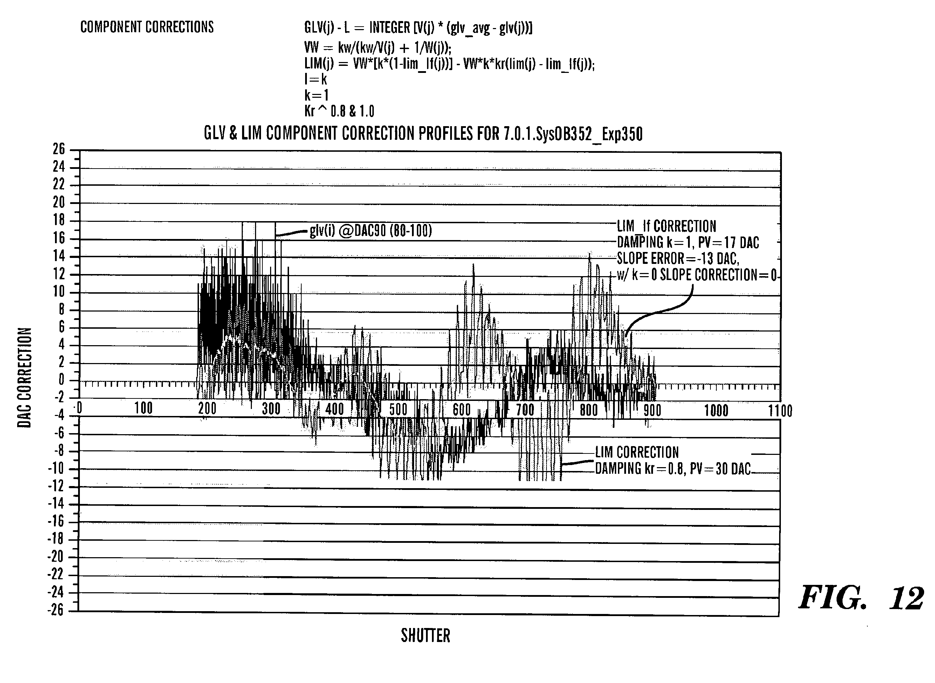

Fig. 12 further shows the component corrections and specifically the DAC correction as a function of GLV element.

While this invention has been particularly shown and described with references to preferred embodiments thereof, it will be understood by those skilled in the art that various changes in form and details may be made therein without departing from the scope of the invention encompassed by the appended claims.

## Claims

1. A calibration system for a platesetter or imagesetter having an imaging engine (10) comprising a media drum (110) and a carriage (120) including a light source (122) and a spatial light modulator (130) for selectively exposing media (12) held against the drum (110), the calibration system comprising:
- a calibration sensor (150) relative to which said spatial light modulator (130) is scanned;
- controller means (131) that calculate primary control levels for elements (216) of said spatial light modulator (130) that compensate for spatial variations in intensity across said spatial light modulator (130) and modify said primary control levels into secondary control levels;
- digital-to-analog converter means (132, 134) to control exposure levels of elements (216) of said spatial light modulator (130) in response to said secondary control levels;
the system being **characterized in that** said secondary control levels under-compensate for the spatial variations in intensity across said spatial light modulator (130) to compensate for pulse width changes of the elements (216) of said spatial light modulator (130).

2. A calibration system according to claim 1, wherein said calibration sensor (150) comprises a photodiode (152) and a slit aperture (154) to detect the responses of individual elements (216) of said spatial light modulator (130).

3. A calibration system according to anyone of the previous claims, wherein said digital-to-analog converter means (132,134) is able to control both the ON and OFF exposure levels of said elements (216) of said spatial light modulator (130).

4. A calibration system according to anyone of the previous claims, wherein said controller (131) loads a modulation pattern into said spatial light modulator (130) enabling discrimination of exposure levels provided by individual elements (216) of said spatial light modulator (130).

5. A calibration system according to claim 4 wherein said modulation pattern comprises on-state elements surrounded by off-state elements.

6. A calibration system according to anyone of the previous claims, further comprising photosensitive media (12) outside of the drum (110).

7. A calibration system according to anyone of the previous claims, wherein the media (12) comprise a plate.

8. A calibration system according to anyone of the previous claims, wherein said carriage (120) moves on a track (140) along side the drum (110).

9. A method for compensating for pulse width changes of elements (216) of a spatial light modulator (130) in a printing system, the method comprising the following steps:
- detecting intensity levels of light provided by elements (216) of a spatial light modulator (130);
- determining primary control levels for the elements of the spatial light modulator to compensate for spatial variations in intensity across the spatial light modulator (130);
- determining secondary control levels based on said primary control levels for the elements of the spatial light modulator (130);
**characterized in that** said secondary control levels under-compensate for spatial variations in intensity across the spatial light modulator (130).

## Patentansprüche

1. Kalibriersystem für einen Plattenbelichter oder Bildbelichter mit einer Bildverarbeitungsmaschine (10), die eine Medientrommel (110) und einen Schlitten (120) aufweist, umfassend eine Lichtquelle (122) und einen räumlichen Lichtmodulator (130) zum selektiven Belichten von Medien (12), die gegen die Trommel (110) gehalten werden; wobei das Kalibriersystem aufweist:
- einen Kalibriersensor (150), in Bezug auf den der räumliche Lichtmodulator (130) abgetastet wird;
- Steuerungsmittel (131), welche primäre Steuerpegel für Elemente (216) des räumlichen Lichtmodulators (130) berechnen, die räumliche Schwankungen in der Intensität über den räumlichen Lichtmodulator (130) kompensieren, und die primären Steuerpegel zu sekundären Steuerpegeln modifizieren.
- Digital-Analog-Umwandlungsmittel (132, 134) zum Steuern von Belichtungsstufen von Elementen (216) des räumlichen Lichtmodulators (130) als Reaktion auf die sekundären Steuerpegel.
und das System **dadurch gekennzeichnet ist, dass** die sekundären Steuerpegel die räumlichen Schwankungen in der Intensität über den räumlichen Lichtmodulator (130) unterkompensieren, um Impulsbreitenänderungen der Elemente (216) des räumlichen Lichtmodulators (130) zu kompensieren.

2. Kalibriersystem nach Anspruch 1, wobei der Kalibriersensor (150) eine Fotodiode (152) und eine Spaltöffnung (154) aufweist, um das Verhalten von einzelnen Elementen (216) des räumlichen Lichtmodulators (130) zu erfassen.

3. Kalibriersystem nach einem der vorhergehenden Ansprüche, wobei das Digital-Analog-Umwandlungsmittel (132, 134) imstande ist, sowohl die EIN- als auch die AUS-Belichtungsstufen der Elemente (216) des räumlichen Lichtmodulators (130) zu steuern.

4. Kalibriersystem nach einem der vorhergehenden Ansprüche, wobei die Steuereinheit (131) ein Modulationsmuster in den räumlichen Lichtmodulator (130) lädt, wodurch eine Unterscheidung von Belichtungsstufen ermöglicht wird, die durch einzelne Elemente (216) des räumlichen Lichtmodulators (130) bereitgestellt werden.

5. Kalibriersystem nach Anspruch 4, wobei das Modulationsmuster Ein-Zustands-Elemente aufweist, die von Aus-Zustands-Elementen umgeben sind.

6. Kalibriersystem nach einem der vorhergehenden Ansprüche, ferner aufweisend lichtempfindliche Medien (12) außerhalb der Trommel (110).

7. Kalibriersystem nach einem der vorhergehenden Ansprüche, wobei die Medien (12) eine Platte aufweisen.

8. Kalibriersystem nach einem der vorhergehenden Ansprüche, wobei der Schlitten (120) sich auf einer Laufschiene (140) längsseits der Trommel (110) bewegt.

9. Verfahren zum Kompensieren von Impulsbreitenänderungen von Elementen (216) eines räumlichen Lichtmodulators (130) in einem Drucksystem, wobei das Verfahren die folgenden Schritte umfasst:
- Erfassen von Intensitätsstufen von Licht, die durch Elemente (216) eines räumlichen Lichtmodulators (130) bereitgestellt werden;
- Bestimmen von primären Steuerpegeln für die Elemente des räumliche Lichtmodulators, um räumliche Schwankungen in der Intensität über den räumlichen Lichtmodulator (130) zu kompensieren;
- Bestimmen von sekundären Steuerpegeln basierend auf den primären Steuerpegeln für die Elemente des räumlichen Lichtmodulators (130);
**dadurch gekennzeichnet, dass** die sekundären Steuerpegel räumliche Schwankungen in der Intensität über den räumlichen Lichtmodulator (130) unterkompensieren.

## Revendications

1. Système de calibrage pour une imageuse plaque ou une imageuse film dotée d'un processeur d'image (10) comportant un tambour de support (110) et un chariot (120) comprenant une source lumineuse (122) et un modulateur spatial de lumière (130) pour exposer sélectivement un support (12) maintenu contre le tambour (110), le système de calibrage comportant :
- un capteur de calibrage (150) par rapport auquel ledit modulateur spatial de lumière (130) effectue un balayage ;
- des moyens de contrôleur (131) qui calculent des niveaux de contrôle primaires pour des éléments (216) dudit modulateur spatial de lumière (130) qui compensent des variations spatiales d'intensité en travers dudit modulateur spatial de lumière (130) et modifient lesdits niveaux de contrôle primaires en niveaux de contrôle secondaires ;
- un moyen de convertisseur numérique-analogique (132, 134) pour contrôler des niveaux d'exposition des éléments (216) dudit modulateur spatial de lumière (130) en réponse auxdits niveaux de contrôle secondaires ;
le système étant **caractérisé en ce que** lesdits niveaux de contrôle secondaires compensent incomplètement les variations spatiales d'intensité en travers dudit modulateur spatial de lumière (130) afin de compenser des changements de largeur d'impulsion des éléments (216) dudit modulateur spatial de lumière (130).

2. Système de calibrage selon la revendication 1, où ledit capteur de calibrage (150) comporte une photodiode (152) et une ouverture en fente (154) pour détecter les réponses d'éléments individuels (216) dudit modulateur spatial de lumière (130).

3. Système de calibrage selon l'une quelconque des revendications précédentes, où ledit moyen de convertisseur numérique-analogique (132, 134) est en mesure de contrôler les deux niveaux MARCHE et ARRET d'exposition desdits éléments (216) dudit modulateur spatial de lumière (130).

4. Système de calibrage selon l'une quelconque des revendications précédentes, où ledit contrôleur (131) charge un profil de modulation dans ledit modulateur spatial de lumière (130) permettant la discrimination des niveaux d'exposition fournis par des éléments individuels (216) dudit modulateur spatial de lumière (130).

5. Système de calibrage selon la revendication 4, où ledit profil de modulation comprend des éléments à l'état "marche" entourés d'éléments à l'état "arrêt".

6. Système de calibrage selon l'une quelconque des revendications précédentes, comportant en outre un support photosensible (12) à l'extérieur du tambour (110).

7. Système de calibrage selon l'une quelconque des revendications précédentes, où le support (12) comporte une plaque.

8. Système de calibrage selon l'une quelconque des revendications précédentes, où ledit chariot (120) se déplace sur un rail (140) le long du tambour (110).

9. Procédé de compensation des changements de largeur d'impulsion d'éléments (216) d'un modulateur spatial de lumière (130) dans un système d'impression, le procédé comportant les étapes suivantes :
- détecter des niveaux d'intensité lumineuse fournis par des éléments (216) d'un modulateur spatial de lumière (130) ;
- déterminer des niveaux de contrôle primaires pour les éléments du modulateur spatial de lumière afin de compenser des variations spatiales d'intensité en travers du modulateur spatial de lumière (130) ;
- déterminer des niveaux de contrôle secondaires basés sur lesdits niveaux de contrôle primaires pour les éléments du modulateur spatial de lumière (130) ;
**caractérisé en ce que** lesdits niveaux de contrôle secondaires compensent incomplètement des variations spatiales d'intensité en travers du modulateur spatial de lumière (130).
